# EUROPÄISCHE PATENTSCHRIFT

(11) **EP 3 079 949 B1**
(45) Veröffentlichungstag und Bekanntmachung des Hinweises auf die Patenterteilung: **07.03.2018**
(21) Anmeldenummer: 14815574.0
(22) Anmeldetag: 09.12.2014
(51) Int. Cl.: B60R 7/08

(54) **HALTEEINRICHTUNG, INSBESONDERE TÜCHERBOXHALTER, FÜR EINE TÜCHERBOX**
HOLDING DEVICE, IN PARTICULAR TISSUE BOX HOLDER, FOR A TISSUE BOX
DISPOSITIF DE FIXATION, EN PARTICULIER FIXATION DE BOÎTE DE MOUCHOIRS, POUR UNE BOÎTE DE MOUCHOIRS

(30) Priorität: 13.12.2013 DE 102013021395
(43) Veröffentlichungstag der Anmeldung: 19.10.2016
(73) Patentinhaber: Daimler AG, 70327 Stuttgart (DE)
(72) Erfinder: BÖHMLER, Patrick, 71032 Böblingen (DE); SIFFERLIEN, Sabine, 72149 Neustetten (DE)
(74) Vertreter: Moore, David Simon
(86) Internationale Anmeldenummer: PCT/EP2014/003288
(87) Internationale Veröffentlichungsnummer: WO 2015/086143

(56) Entgegenhaltungen:
- EP-A1- 1 281 342
- CN-A- 101 915 352
- US-A- 5 738 319
- US-A1- 2002 113 187
- US-A1- 2003 121 943
- US-B1- 7 566 036

## Beschreibung

Die Erfindung betrifft eine Halteeinrichtung, insbesondere Tücherboxhalter, für eine Tücherbox. Die Erfindung betrifft ferner eine Baugruppe mit einer solchen Halteeinrichtung sowie ein Kraftfahrzeug mit einer solchen Baugruppe.

Tücherboxen, die im Fachhandel auch unter dem Begriff "Taschentuchspender" erhältlich sind, dienen zur Aufnahme von Kosmetiktüchern, welche vom Benutzer im Bedarfsfall durch eine Entnahmeöffnung entnommen werden können. Haushaltstypische Tücherboxen weisen der Einfachheit halber oftmals die geometrische Gestalt eines Quaders auf, was sich beim Transport im Innenraum eines Kraftfahrzeugs - aufgrund des dort begrenzt vorhandenen Stauraums - oftmals als unpraktisch erweist.

Aus dem Stand der Technik sind bereits Halterungen zur Fixierung eines quaderförmigen Gegenstandes, beispielsweise eines Displays, im Innenraum eines Kraftfahrzeuges bekannt. Hierbei offenbart die CN 101 915 352 A einen bügelartig ausgebildeten Grundkörper, welcher drei mit Fixierelementen versehene, zueinander längenverstellbare Bügelarme, zur Fixierung eines Displays, aufweist.

Eine Halteeinrichtung für eine Tücherbox, nach der oben beschriebenen Art, an der Kopfstütze eines Kraftfahrzeugsitzes, wird in der US 2003/121943 A1 offenbart. Hierbei kann die Tücherbox in einem starren, aus Stangen aufgebauten Rahmen, fixiert werden.

Der vorliegenden Erfindung liegt daher die Aufgabe zugrunde, eine Halteeinrichtung zu schaffen, welche eine aus praktischen Erwägungen heraus gleichermaßen platzsparende wie auch durch einen Vorspannmechanismus gegen Erschütterungen durch Fahrbewegungen gesicherte Halterung besagter Tücherbox im Innenraum des Fahrzeugs gestattet. Es ist eine weitere, zweite Aufgabe der Erfindung, eine Baugruppe mit einer solchen durch einen Vorspannmechanismus gekennzeichnete Halteeinrichtung anzugeben. Eine dritte Aufgabe der Erfindung liegt schließlich darin, ein Kraftfahrzeug mit wenigstens einer solchen Baugruppe zu schaffen.

Die genannten Aufgaben werden durch den Gegenstand der unabhängigen Patentansprüche gelöst. Bevorzugte Ausführungsformen sind Gegenstand der abhängigen Patentansprüche.

Grundgedanke der Erfindung ist demnach, eine Halteeinrichtung für eine Tücherbox mit einem bügelartigen Grundkörper auszubilden, von welchem ein erster und ein zweiter Bügelarm mit einem jeweils längenverstellbaren Endabschnitt abstehen. Besagte Längenverstellbarkeit der Bügelarme gestattet es, die Abmessungen der Halteeinrichtung innerhalb eines vorgegebenen Verstellbereichs an jene der zu fixierenden Tücherbox anzupassen. Erfindungswesentlich sind ferner ein am Endabschnitt des ersten Bügelarms vorgesehenes erstes Fixierelement sowie ein am Endabschnitt des zweiten Bügelarms vorgesehenes zweites Fixierelement, welche beide zum Fixieren der Tücherbox dienen. Eine stabile Fixierung der Tücherbox an der Halteeinrichtung wird erreicht, indem am Grundkörper ein die beiden ersten Fixierelemente komplettierendes, drittes Fixierelement vorgesehen wird, welches mit einem Vorspannmechanismus versehen ist, so dass die Tücherbox gegen die beiden ersten Fixierelemente zur Sicherung während des Fahrbetriebes vorgespannt und dadurch in einem Bereich zwischen den drei Fixierelementen aufgenommen und mittels der drei Fixierelemente gehalten werden kann. Eine erfindungsgemäße Tücherbox wird demnach durch einen am dritten Fixierelement angebrachten Vorspannmechanismus gegen das erste und zweite Fixierelement vorgespannt und somit gegen Erschütterungen und ein daraus resultierendes Herauslösen der Tücherbox aus der Halterung im Fahrbetrieb gesichert.

Die auf diese Weise auf die Tücherbox ausgeübte Vorspannkraft hat eine besonders zuverlässige Halterung der Tücherbox in der Halteeinrichtung zur Folge, und zwar auch bei etwaig auf die Halteeinrichtung wirkenden Vibrationen, Erschütterungen oder gar Stößen, wie sie im Fahrbetrieb im Fahrzeuginnenraum eines Kraftfahrzeugs regelmäßig auftreten können. In vorteilhaften Weiterbildungen kann auch das erste und/oder das zweite Fixierelement mit einem solchen Vorspanmechanismus ausgestattet werden. Insbesondere kann ein sowohl am ersten als auch am zweiten Fixierelement vorgesehener Vorspannmechanismus gleichwirkend ausgestaltet sein, d.h. die beiden Fixierelemente verfügen in diesem Szenario über einen gekoppelten Vorspannmechanismus.

Zur weiteren Verbesserung der erzielten Haltewirkung empfiehlt es sich, die drei Fixierelemente jeweils als Fixierhaken auszubilden, welche zur Fixierung der Tücherbox jeweils von einer gemeinsamen Vorderseite der beiden Bügelarme und des Grundkörpers abstehen. Als besonders zweckmäßig erweist es sich, die jeweiligen Fixierhaken mit U-förmiger Geometrie zu versehen.

Im Hinblick auf den erforderlichen Platzbedarf erweist sich eine konstruktive Ausgestaltungsform der Halteeinrichtung als besonders günstig, bei welcher die virtuellen Verbindungsgeraden zwischen den drei Fixierelementen die geometrische Gestalt eines gleichschenkligen Dreiecks ergeben, wobei durch das dritte Fixierelement die Spitze des gleichschenkligen Dreiecks definiert ist. In diesem Szenario sollen die beiden Basiswinkel des gleichschenkligen Dreiecks einen Wert von maximal 50°, vorzugsweise von maximal 45°, höchst vorzugsweise von maximal 35°, aufweisen.

Für eine komfortable und platzsparende Befestigung der oben beschriebenen Halteeinrichtung - und somit der daran fixierten Tücherbox - in einem Kraftfahrzeug wird erfindungsgemäß ferner eine Baugruppe vorgeschlagen, welche eine Halteeinrichtung mit einem oder mehreren der vorangehend erörterten Merkmale umfasst. Darüber hinaus umfasst die Baugruppe auch ein Adapterbauteil, welches an den Kopfstützenholmen eines Fahrzeugsitzes befestigbar ist. Die Halteeinrichtung lässt sich dann mittels eines ersten Befestigungselements - dieses kann auf einer dessen erster Seite gegenüberliegender zweiten Seite angebracht sein - an einem am Adapterelement vorgesehenen und zum ersten Befestigungselement komplementären zweiten Befestigungselement in der Art einer Clipverbindung lösbar befestigen.

Das Adapterelement selbst kann etwa in der Art eines Bolzens ausgebildet sein, welches wiederum, ebenfalls unter Ausbildung einer Clipverbindung, an besagten Holmen der Kopfstütze fixiert werden kann. Das Adapterelement mag insbesondere derart konstruiert sein, dass es sich alternativ zur Befestigung der hier vorgestellten Halteeinrichtung auch zur Anbringung anderer Gegenstände oder Halterungen eignet.

Dem Fachmann ist in diesem Zusammenhang klar, dass die hier vorgestellte Halteeinrichtung grundsätzlich nicht nur auf die Fixierung von Tücherboxen beschränkt ist, sondern sich grundsätzlich auch zur Fixierung anderer Gegenstände mit geeigneter Geometrie, vorzugsweise jedoch mit der geometrischen Formgebung eines Quaders, eignet.

Die Erfindung betrifft schließlich ein Kraftfahrzeug mit wenigstens einem Fahrzeugsitz, welcher eine Kopfstütze mit zwei Kopfstützenholmen umfasst, wobei die oben erörterte Baugruppe mittels ihres Adapterbauteils an den Kopfstützenholmen des Fahrzeugsitzes befestigbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: ein Beispiel einer erfindungsgemäßen Halteeinrichtung,
- Fig. 2: ein Beispiel einer erfindungsgemäßen Baugruppe mit der Halteeinrichtung der Figur 1 und in einem an den beiden Kopfstützenholmen eines Fahrzeugsitzes befestigten Zustand.

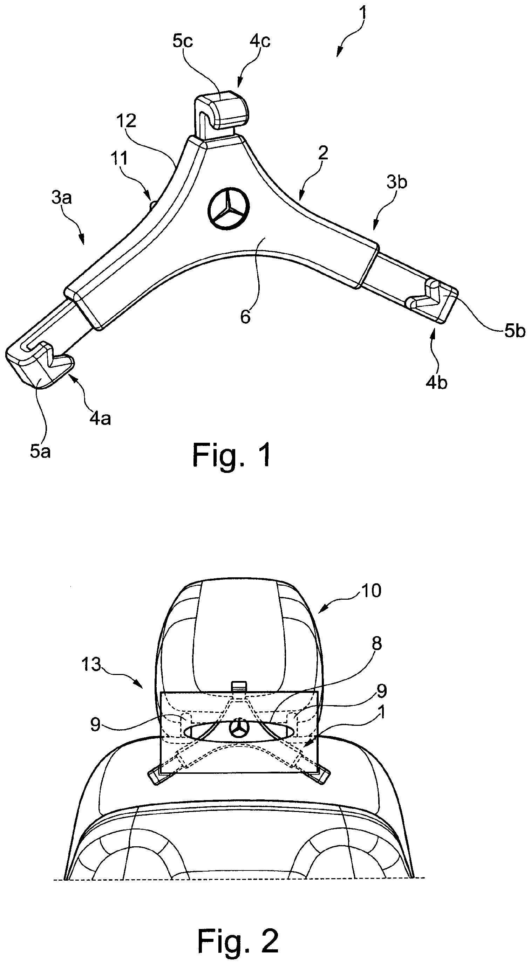

Figur 1 illustriert in einer perspektivischen Ansicht ein Beispiel einer erfindungsgemäßen Halteeinrichtung 1 für eine Tücherbox. Die Halteeinrichtung 1 besitzt einen bügelartig ausgebildeten Grundkörper 2, von welchem ein erster und ein zweiter Bügelarm 3a, 3b mit einem jeweils längenverstellbaren Endabschnitt 4a, 4b abstehen. Am Endabschnitt 4a des ersten Bügelarms 3a, 3b ist ein erstes Fixierelement 5a, am Endabschnitt 5b des zweiten Bügelarms 4b ein zweites Fixierelement 5b vorgesehen; beide dienen zum Fixieren der Tücherbox 7 (in Figur 1 nicht gezeigt, vgl. hierzu Figur 2). Schließlich umfasst die Halteeinrichtung 1 direkt am Grundkörper 2 und zwischen den beiden Bügelarmen 3a, 3b ein ebenfalls längenverstellbares, drittes Fixierelement 5c.

Erfindungswesentlich ist nunmehr, dass die drei Fixierelemente 5a, 5b, 5c derart zueinander angeordnet sind, dass in einem Bereich zwischen ihnen eine Tücherbox fixierbar ist. Hinsichtlich ihrer geometrischen Anordnung können die drei Fixierelemente 5a, 5b, 5c in Eckpunkten eines virtuellen gleichschenkligen Dreiecks angeordnet sein. Mit anderen Worten, die drei virtuellen Verbindungsgeraden zwischen den drei Fixierelementen 5a, 5b, 5c bilden ein gleichschenkliges Dreieck, wobei durch das dritte Fixierelement 5c die Spitze des Dreiecks definiert wird. Die beiden Basiswinkel des gleichschenkligen Dreiecks weisen im Beispielszenario einen Wert von maximal 50°, vorzugsweise von maximal 45°, höchst vorzugsweise von maximal 35°, auf. In einer Variante können die beiden Bügelarme 3a, 3b unter einem Winkel von im Wesentlichen 135° zueinander angeordnet sein.

Zur zuverlässigen Fixierung der Tücherbox 7 an der Halteeinrichtung 1 ist das dritte Fixierelement 5c mit einem Vorspannmechanismus ausgestattet, welcher die Tücherbox 7 in einem an den drei Fixierelementen 5a, 5b, 5c angebrachten Zustand gegen das erste und zweite Fixierelement 5a, 5b vorspannt. Derartige Vorspannmechanismen sind dem einschlägigen Fachmann geläufig und lassen sich konstruktiv etwa auf Basis eines herkömmlichen Federelements realisieren. In Varianten können alternativ oder zusätzlich auch das erste und/oder das zweite Fixierelement 5a, 5b mit einem solchen Vorspannmechanismus versehen sein. Insbesondere kann ein sowohl am ersten als auch am zweiten Fixierelement 5a, 5b vorgesehener Vorspannmechanismus gleichwirkend ausgestaltet sein, d.h. die Fixierelemente 5a, 5b verfügen in diesem Fall über einen gemeinsamen Vorspannmechanismus, der beispielsweise mit Hilfe eines gemeinsamen Federelements realisiert sein kann.

Der Figur 1 lässt sich ferner entnehmen, dass die drei Fixierelemente 5a, 5b, 5c jeweils als Fixierhaken mit im Wesentlichen U-förmiger Geometrie ausgebildet sind, welche zur Fixierung der Tücherbox 7 jeweils von einer gemeinsamen Vorderseite 6 der beiden Bügelarme 3a, 3b und des Grundkörpers 2 abstehen.

Figur 2 zeigt in einer Rückansicht eine erfindungsgemäße Baugruppe 13 mit der vorangehend erörterten Halteeinrichtung 1, an welcher eine Tücherbox 7 befestigt ist, sowie ein nur grobschematisch angedeutetes Adapterbauteil 8, mittels welchem die Halteeinrichtung 1 lösbar an den Kopfstützenholmen 9 eines Fahrzeugsitzes 10 befestigbar ist. Die Halteeinrichtung 1 umfasst ein erstes Befestigungselement (in Figur 1 nur schematisch angedeutet und mit dem Bezugszeichen 11 bezeichnet), welches auf einer dessen erster Seite 6 gegenüberliegender zweiten Seite 12 angebracht ist. Am Adapterelement 8 ist entsprechend ein zum ersten Befestigungselement 11 komplementäres zweites Befestigungselement vorgesehen (nicht gezeigt). Erstes Befestigungselement 11 und zweites Befestigungselement bilden dabei eine Clipverbindung aus. Das Adapterelement 8 ist in der Art eines Bolzens ausgebildet, welches mittels einer weiteren Clipverbindung, an besagten Kopfstützenholmen 9 befestigt werden kann. Das am Adapterelement 9 vorgesehene zweite Befestigungselement eignet sich nicht nur zur Anbringung der hier vorgestellten Halteeinrichtung 1, sondern auch zur Befestigung weiterer geeigneter Bauteile.

## Patentansprüche

1. Halteeinrichtung (1), insbesondere Tücherboxhalter, für eine Tücherbox,
- mit einem bügelartig ausgebildeten Grundkörper (2), von welchem ein erster und ein zweiter Bügelarm (3a, 3b) mit einem jeweils längenverstellbaren Endabschnitt (4a, 4b) absteht, wobei am Endabschnitt (4a) des ersten Bügelarms (3a) ein erstes Fixierelement (5a) und am Endabschnitt (4b) des zweiten Bügelarms (3b) ein zweites Fixierelement (5b), jeweils zum Fixieren der Tücherbox (7), vorgesehen ist,
- mit einem am Grundkörper (2) vorgesehenen und zwischen erstem und zweitem Fixierelement (5a, 5b) vorgesehenen dritten, ebenfalls längenverstellbaren Fixierelement (5c),
**dadurch gekennzeichnet, dass**
das dritte Fixierelement (5c) einen Vorspannmechanismus umfasst, welches die Tücherbox (7) in einem an den Fixierelementen (5a, 5b, 5c) fixierten Zustand gegen das erste und zweite Fixierelement (5a, 5b) vorspannt.

2. Halteeinrichtung nach Anspruch 1,
**dadurch gekennzeichnet, dass**
die drei Fixierelemente (5a, 5b, 5c) als Fixierhaken ausgebildet sind, welche jeweils von einer gemeinsamen Vorderseite (6) der beiden Bügelarme (3a, 3b) und des Grundkörpers (2) abstehen.

3. Halteeinrichtung nach Anspruch 1 oder 2,
**dadurch gekennzeichnet, dass**
die Bügelarme (3a, 3b) in Gestalt eines gleichschenkligen Dreiecks mit Basiswinkeln von maximal 50°, vorzugsweise von maximal 45° und höchst vorzugsweise von maximal 35° zueinander angeordnet sind.

4. Baugruppe (13),
- mit einer Halteeinrichtung (1) nach Anspruch 1,
- mit einem Adapterelement (8), welches an Kopfstützenholmen (9) einer Kopfstütze eines Fahrzeugsitzes (10) befestigbar ist,
- wobei die Halteeinrichtung (1) mittels eines ersten Befestigungselements (11), welches auf einer dessen erster Seite (6) gegenüberliegender zweiten Seite (12) angebracht ist, an einem am Adapterelement (8) vorgesehenen und zum ersten Befestigungselement (11) komplementären zweiten Befestigungselement in der Art einer Clipverbindung lösbar befestigbar oder befestigt ist.

5. Kraftfahrzeug,
- mit wenigstens einem Fahrzeugsitz (10), welcher eine Kopfstütze mit zwei Kopfstützenholmen (9) umfasst,
- mit einer Baugruppe (13) nach Anspruch 4, deren Adapterbauteil (8) an den Kopfstützenholmen (9) des Fahrzeugsitzes (10) befestigt ist.

## Claims

1. Holding device (1), in particular tissue box holder for a tissue box, comprising
- a base body (2) of a bracket-shaped design, from which project a first and a second bracket arm (3a, 3b), each with a length-adjustable end section (4a, 4b), wherein a first fixing element (5a) is provided on the end section (4a) of the first bracket arm (3a) and a second fixing element (5b) is provided on the end section (4b) of the second bracket arm (3b), each used for fixing the tissue box (7),
- a third, likewise length-adjustable fixing element (5c) provided between the first and the second fixing element (5a, 5b),
**characterised in that**
the third fixing element (5c) comprises a preloading mechanism which preloads the tissue box (7) in a state in which it is fixed to the fixing elements (5a, 5b) against the first and the second fixing element (5a, 5b).

2. Holding device according to claim 1,
**characterised in that**
the three fixing elements (5a, 5b, 5c) are designed as fixing hooks, each projecting from a joint front side (6) of the two bracket arms (3a, 3b) and the base body (2).

3. Holding device according to claim 1 or 2,
**characterised in that**
the bracket arms (3a, 3b) are arranged in the shape of an isosceles triangle relative to each other with base angles of maximally 50°, preferably maximally 45° and most preferably maximally 35°.

4. Assembly (13), comprising
- a holding device (1) according to claim 1,
- an adapter element (8), which can be secured to headrest bars (9) of a headrest of a vehicle seat (10),
- wherein the a holding device (1) can be or is releasably secured in the manner of a clip connection, by means of a first fastener (11) mounted on a second side (12) opposite its first side (6), to a second fastener provided on the adapter element (8) and complementing the first fastener (11).

5. Motor vehicle, comprising
- at least one vehicle seat (10) having a headrest with two headrest bars (9),
- an assembly (13) according to claim 4, the adapter element (8) of which is secured to the headrest bars (9) of the vehicle seat (10).

## Revendications

1. Dispositif de fixation (1) en particulier fixation de boîtier de mouchoirs, pour un boîtier de mouchoirs,
- comprenant un corps de base (2) conçu sous la forme d'un étrier, à partir duquel fait saillie un premier et un second bras (3a, 3b) d'étrier ayant une section d'extrémité (4a, 4b) pouvant être respectivement réglable en longueur, sur la section d'extrémité (4a) du premier bras (3a) d'étrier est aménagé un premier élément de fixation (5a) et sur la section d'extrémité (5b) du second bras (3b) d'étrier est aménagé un deuxième élément de fixation (5b), respectivement pour fixer la boîte de mouchoirs (7),
- comprenant un troisième élément de fixation (5c) pouvant également être réglable en longueur aménagé sur le corps de base (2) et entre le premier et le deuxième élément de fixation (5a, 5b), **caractérisé en ce que** le troisième élément de fixation (5c) comprend un mécanisme de précontrainte qui précontrainte la boîte de mouchoirs (7) dans un état de fixation sur les éléments de fixation (5a, 5b, 5c) contre le premier et le deuxième élément de fixation (5a, 5b).

2. Dispositif de fixation selon la revendication 1, **caractérisé en ce que** les trois éléments de fixation (5a, 5b, 5c) sont conçus sous la forme de crochets de fixation qui respectivement font saillie à partir d'une face avant (6) commune des deux bras (3a, 3b) d'étrier et du corps de base.

3. Dispositif de fixation selon la revendication 1 ou la revendication 2, **caractérisé en ce que** les bras (3a, 3b) d'étrier sont disposés les uns par rapport aux autres sous la forme d'un triangle isocèle ayant des angles de base de 50° au maximum, de préférence de 45° au maximum et mieux encore de 35° au maximum.

4. Module (13),
- comprenant un dispositif de fixation (1) selon la revendication 1,
- comprenant un élément adaptateur (8) qui peut être fixé sur des tiges (9) d'un appuie-tête d'un siège (10) de véhicule,
- le dispositif de fixation (1) pouvant être fixé de manière détachable au moyen d'un premier élément de fixation (11) qui est placé sur une seconde face (12) en regard de sa première face (6), sur un second élément de fixation complémentaire au premier élément de fixation (11) et aménagé sur l'élément adaptateur (8) sous la forme d'une liaison à clips.

5. Véhicule automobile,
- comprenant au moins un siège (10) de véhicule qui comporte un appui-tête ayant deux tiges (9) d'appui-tête,
- comprenant un module (13) selon la revendication 4, dont l'élément structural adaptateur (8) est fixé sur les tiges (9) d'appui-tête du siège (10) de véhicule.
